# FASCICULE DE BREVET EUROPEEN

(11) **EP 0 873 498 B1**
(45) Date de publication et mention de la délivrance du brevet: **08.08.2001**
(21) Numéro de dépôt: 97900241.7
(22) Date de dépôt: 07.01.1997
(51) Int. Cl.: G01H 1/00, H04B 1/38

(54) **CAPTEUR DE VIBRATIONS**
VIBRATIONS SENSOR
VIBRATION SENSOR

(30) Priorité: 08.01.1996 FR 9600127
(43) Date de publication de la demande: 28.10.1998
(73) Titulaire: SAGEM S.A., 75016 Paris (FR)
(72) Inventeur: HOUSNI, Jamal, F-92400 Courbevoie (FR)
(74) Mandataire: Fruchard, Guy
(86) Numéro de dépôt international: FR9700024
(87) Numéro de publication internationale: WO9725598

(56) Documents cités:
- EP-A- 0 519 621
- EP-A- 0 679 044
- FR-A- 2 726 655
- SU-A- 1 250 956
- US-A- 3 787 641
- US-A- 4 654 883
- US-A- 5 208 867

## Description

La présente invention concerne un capteur de vibrations à accéléromètre.

On connaît des capteurs de vibrations comportant un accéléromètre porté par un tampon élastique (voir EP-A-0 519 621). Un tel capteur de vibrations peut en particulier être utilisé comme micro ostéophonique en mettant l'accéléromètre en contact avec la boîte crânienne d'un utilisateur. De tels capteurs de vibrations présentent l'avantage d'être de petites dimensions mais ils présentent également l'inconvénient de transmettre non seulement les vibrations de la source sur laquelle le capteur est appliqué mais également les bruits environnants. Or il s'avère que les bruits environnants sont souvent d'un niveau élevé par rapport au signal que l'on souhaite transmettre. En particulier dans le cas d'un capteur ostéophonique disposé dans le casque d'un motard le frottement de l'air sur le casque génère des vibrations qui sont d'autant plus élevées que la vitesse du motard est plus élevée et perturbent donc la communication de façon importante alors que celle-ci doit rester claire et intelligible à tout moment.

Selon l'invention on propose un capteur de vibrations comportant un premier accéléromètre porté par un tampon élastique associé à une plaque portant un second accéléromètre et comportant un organe d'écartement élastique disposé autour du tampon élastique portant le premier accéléromètre et ayant une épaisseur inférieure au tampon élastique au repos et une dureté supérieure à celle du tampon élastique, le premier et le second accéléromètres étant reliés à un dispositif générant un signal de différence entre des signaux du premier et du second accéléromètre.

Ainsi, lorsque le premier accéléromètre est appliqué sur une source de vibrations il est soumis à la fois aux vibrations de la source et aux bruits environnants tandis que le second accéléromètre qui est maintenu écarté de la source de vibrations n'est pratiquement soumis qu'aux bruits environnants de sorte que le signal de différence obtenu est représentatif des seules vibrations dues à la source.

Selon une version avantageuse de l'invention, le premier accéléromètre est porté par une plaque. On répartit ainsi la force d'appui du premier accéléromètre sur la source de vibrations, ce qui améliore le confort dans le cas d'un capteur ostéophonique.

Selon un mode de réalisation préféré de l'invention, le premier et le second accéléromètre sont décalés l'un par rapport à l'autre. Il est ainsi possible de réaliser un capteur présentant un encombrement réduit.

D'autres caractéristiques et avantages de l'invention apparaîtront à la lecture de la description qui suit d'un mode de réalisation préféré de l'invention, en référence aux figures ci-jointes parmi lesquelles:

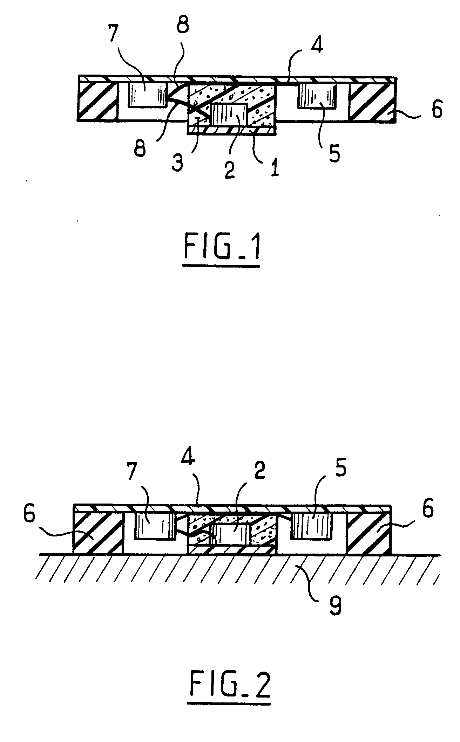

- la figure 1 est une vue en coupe schématique du capteur selon l'invention avant sa mise en place sur une source de vibrations,
- la figure 2 est une vue en coupe analogue à celle de la figure 1 lorsque le capteur est mis en place sur une source de vibrations.

En référence aux figures, le capteur de vibrations selon l'invention comporte un premier accéléromètre 2 fixé sur une plaque 1 porté par un tampon élastique 3, par exemple un tampon de mousse souple à cellules ouvertes. Le tampon élastique 3 est fixé à une plaque 4 portant un second accéléromètre 5 décalé par rapport au premier accéléromètre. La plaque 4 comporte un organe d'écartement élastique, ici un boudin en caoutchouc ayant une épaisseur inférieure au tampon élastique 3 lorsque celui-ci est au repos et une dureté supérieure à celle du tampon élastique. Un dispositif électronique 7 est relié au premier et au second accéléromètre par des fils de liaison 8, et est réalisé pour générer un signal de différence entre les signaux émis par le premier et le second accéléromètre.

Lors de l'application du capteur selon l'invention sur une source de vibrations telle que le crâne 9 d'un utilisateur, la plaque 1 vient tout d'abord au contact de la source de vibrations et est maintenue en appui sur celle-ci par l'écrasement du tampon élastique 3. La plaque 4 est par ailleurs maintenue à une distance sensiblement constante de la source de vibrations par l'organe d'écartement 6. Dans cette position, le décalage entre le premier accéléromètre 2 et le second accéléromètre 5 permet de les imbriquer l'un par rapport à l'autre de sorte que le capteur selon l'invention est de très faible encombrement. A titre d'exemple alors que les accéléromètres actuellement disponibles ont généralement une épaisseur de l'ordre de 5 mm, le capteur selon l'invention peut être réalisé en prévoyant un organe d'écartement ayant une épaisseur de 7 mm seulement, la plaque 1 ayant une épaisseur de 0,5 mm et la plaque 4 ayant une épaisseur de 1 mm.

Bien entendu l'invention n'est pas limitée au mode de réalisation décrit et on peut y apporter des variantes de réalisation sans sortir du cadre de l'invention tel que défini par les revendications.

En particulier, bien que le dispositif d'écartement 6 ait été décrit sous forme d'un boudin annulaire entourant complètement le tampon élastique 3, on pourra obtenir un meilleur effet différentiel entre les accéléromètres vis-à-vis des bruits environnants en prévoyant un organe d'écartement sous forme d'une série de segments espacés les uns des autres pour que les deux accéléromètres soient soumis de façon semblable aux vibrations environnantes. Bien entendu le capteur selon l'invention pourra également être conditionné dans un tissu et inséré dans une mousse de capitonnage en particulier lorsque le capteur doit être monté sur un casque.

Bien que le dispositif électronique 7 ait été représenté intégré au capteur selon l'invention, il peut être monté de façon séparée ou divisé en deux parties dont l'une est intégrée au capteur et l'autre est montée de façon séparée de celui-ci

## Revendications

1. Capteur de vibrations comportant un premier accéléromètre (2) associé à une plaque (4) par un tampon élastique (3) caractérisé en ce que la plaque (4) porte un second accéléromètre (5), et comporte un organe d'écartement élastique (6) disposé autour du tampon portant le premier accéléromètre et ayant une épaisseur inférieure au tampon élastique au repos et une dureté supérieure à celle du tampon élastique, le premier et le second accéléromètres étant reliés à un dispositif générant un signal de différence entre des signaux du premier et du second accéléromètre.

2. Capteur de vibrations selon la revendication 1, caractérisé en ce que le premier accéléromètre (2) est porté par une plaque (1).

3. Capteur de vibrations selon la revendication 1 ou la revendication 2, caractérisé en ce que le premier et le second accéléromètres sont décalés l'un par rapport à l'autre.

## Patentansprüche

1. Vibrationssensor mit einem ersten Beschleunigungsmesser (2), der über einen Federpuffer (3) mit einer Platte (4) verbunden ist, dadurch **gekennzeichnet,** daß die Platte (4) einen zweiten Beschleunigungsmesser (5) trägt und ein elastisches Abstandselement (6) hat, das um den Federpuffer mit dem ersten Beschleunigungsmesser herum angeordnet ist und eine geringere Dicke hat als der Federpuffer im Ruhezustand und härter ist als der Federpuffer, wobei der erste und der zweite Beschleunigungsmesser mit einer Vorrichtung verbunden sind, die ein Differenzsignal zwischen dem ersten und dem zweiten Beschleunigungsmesser erzeugt.

2. Vibrationssensor nach Anspruch 1, dadurch **gekennzeichnet,** daß der erste Beschleunigungsmesser (2) von einer Platte (1) getragen wird.

3. Vibrationssensor nach Anspruch 1 oder 2, dadurch **gekennzeichnet,** daß der erste und der zweite Beschleunigungsmesser gegeneinander versetzt sind.

## Claims

1. A vibration sensor including a first accelerometer (2) associated with a plate (4) by a resilient pad (3), the sensor being characterized in that the plate (4) carries a second accelerometer (5) and includes a resilient spacer member (6) disposed around the pad carrying the first accelerometer, the spacer member being of a thickness that is smaller than that of the resilient pad at rest and of a hardness that is greater than that of the resilient pad, the first and second accelerometers being connected to a circuit which generates a signal representative of the difference between the signals from the first and second accelerometers.

2. A vibration sensor according to claim 1, characterized in that the first accelerometer (2) is carried by a plate (1).

3. A vibration sensor according to claim 1 or claim 2, characterized in that the first and second accelerometers are offset relative to each other.
